# EUROPÄISCHE PATENTSCHRIFT

(11) **EP 1 525 119 B1**
(45) Veröffentlichungstag und Bekanntmachung des Hinweises auf die Patenterteilung: **14.06.2006**
(21) Anmeldenummer: 03709649.2
(22) Anmeldetag: 25.02.2003
(51) Int. Cl.: B60R 21/01, F42D 1/05

(54) **VORRICHTUNG ZUR ANSTEUERUNG VON ZÜNDKREISEN**
DEVICE FOR TRIGGERING IGNITION CIRCUITS
DISPOSITIF POUR AMORCER DES CIRCUITS D'ALLUMAGE

(30) Priorität: 17.07.2002 DE 10232359
(43) Veröffentlichungstag der Anmeldung: 27.04.2005
(73) Patentinhaber: ROBERT BOSCH GMBH, 70442 Stuttgart (DE)
(72) Erfinder: ULMER, Michael, 72116 Moessingen (DE); RUPP, Andreas, 72770 Reutlingen (DE)
(86) Internationale Anmeldenummer: PCT/DE2003/000587
(87) Internationale Veröffentlichungsnummer: WO 2004/016475

(56) Entgegenhaltungen:
- DE-C- 10 109 620

## Beschreibung

### Stand der Technik

Die Erfindung geht aus von einer Vorrichtung zur Ansteuerung von Zündkreisen nach der Gattung des unabhängigen Patentanspruchs.

Aus der gattungsbildenden Deutschen Patentschrift anmeldung DE 101 09 620.8 C ist eine Vorrichtung zur Ansteuerung von Zündkreisen bekannt, bei der für einen Zündkreis eine Plus- und Minus-Endstufe von jeweils unterschiedlichen Substraten verwendet werden.

### Vorteile der Erfindung

Die erfindungsgemäße Vorrichtung zur Ansteuerung von Zündkreisen mit den Merkmalen des unabhängigen Patentanspruchs hat demgegenüber den Vorteil, dass die Vorrichtung kostengünstiger ist, da nun die kreuzgekoppelten Plus- und Minus-Endstufen auf einem einzigen Substrat angeordnet sind. Auch die Modularität der Anordnung wird dabei wesentlich erhöht. Gegenüber Lösungen ohne eine erfindungsgemäße Kreuzkopplung ergibt sich ein signifikanter Sicherheitsgewinn, weil die Plus- und Minusendstufen mit ihrer zugehörigen Zündkreisdiagnose und Ansteuerung unabhängig voneinander ausgeführt sind.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Zündkreisen möglich.

Besonders vorteilhaft ist, dass der geometrische Abstand zwischen der Plus- und Minus-Endstufe des gleichen Zündkreises auf dem Substrat maximiert wird. Dies erhöht die Sicherheit, da durch einen möglichst großen Abstand zwischen der Plus- und Minus-Endstufe für den gleichen Zündkreis so eine große Unabhängigkeit von Fertigungstoleranzen, die auf einem Teil des Substrats lokalisiert sein können, erreicht wird.

Weiterhin ist es von Vorteil, dass ein Paar aus Plus- und Minus-Endstufe die gleiche Energieversorgung aufweisen kann. Dies führt zu einem erheblichen schaltungstechnischen Vorteil und vereinfacht das Design.

### Zeichnung

Ein Ausführungsbeispiel der Erfindung ist in der Zeichnung dargestellt und in der nachfolgenden Beschreibung näher erläutert.

Es zeigen
- Figur 1: ein Blockschaltbild eines erfindungsgemäßen Paares aus Plus- und Minus-Endstufe und
- Figur 2: ein Blockschaltbild der erfindungsgemäßen Vorrichtung.

### Beschreibung

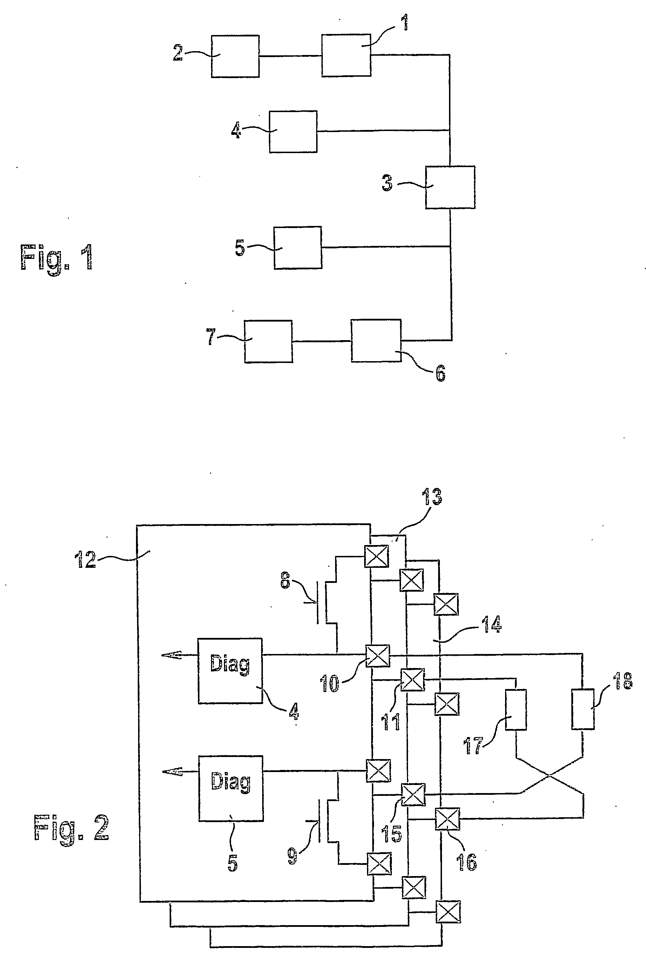

Figur 1 zeigt ein Blockschaltbild eines erfindungsgemäßen Paares aus Plus- und Minus-Endstufe. Eine Ansteuerung 2 ist mit einer Plusendstufe 1 verbunden. Die Plusendstufe 1 ist über ihren anderen Ausgang mit einer Zündpille 3 verbunden und einer Diagnose 4. Auf der anderen Seite ist die Zündpille 3 mit einer Diagnose 5 und einer Minusendstufe 6 verbunden. Die Minusendstufe 6 wird wiederum von einer Ansteuerung 7 angesteuert.

Der Zündkreis wird also von der Plusendstufe 1, der Zündpille 3 und der Minusendstufe 6 gebildet. Dazu kommen noch die Diagnosen 4 und 5 sowie die Ansteuerungen 2 und 7. Die Zündpille bzw. der Zündkreis 3 wird von der Plus- und Minus-Endstufe versorgt, die bei einem Auslösefall durchgeschaltet werden, um den Zündkreis mit dem Zündstrom zu versorgen. Die Plusendstufe wird so genannt, da an ihr die Versorgungsspannung angeschlossen ist, während die Minusendstufe an Masse angeschlossen ist. Die eigene Ansteuerung für die Plus- und Minus-Endstufe 1 und 6 sorgt dafür, dass die Plus- und Minus-Endstufe eines Paares mit anderen Plus- und Minus-Endstufen anderer Paare kreuzgekoppelt werden können, um eine Zündpille zu versorgen. Die Plus- und Minus-Endstufe eines Paares haben hier eine gemeinsame Energieversorgung. Es sind alternativ auch getrennte Energieversorgungen möglich.

Figur 2 zeigt in einem Blockschaltbild die erfindungsgemäße Vorrichtung. Ein Paar aus Plus- und Minus-Endstufe ist in einem Block 12 angeordnet, schematisch sind darunter andere Paare 13 und 14 dargestellt. Die Plusendstufe wird durch einen Plusendstufentransistor 8 gebildet, der über einen Anschluss 10 mit einer Zündpille 18 verbunden ist, die an ihrem anderen Ausgang mit dem Anschluss 15 verbunden ist, der zu einer Minusendstufe gehört, die in einem anderen Paar angeordnet ist. Dies ist das Paar 13. An den Anschluss 10 ist weiterhin eine Diagnose 4 angeschlossen, die zu dem Plusendstufentransistor 8 gehört. Ein Minusendstufentransistor 9 des Paares 12 ist hier mit keiner Zündpille verbunden, es ist jedoch möglich, ihn mit einer solchen Zündpille zu verbinden, die mit einem anderen Plusendstufentransistor eines anderen Paares verbunden ist, um die Kreuzkopplung zu erreichen. An seinem Anschluss weist der Minusendstufentransistor 9 eine eigene Diagnose 5 auf. Eine weitere Zündpille 17 ist über einen Anschluss 11 mit einem Plusendstufentransistor des Paares 13 verbunden. Auf ihrer anderen Seite ist die Zündpille 17 an einen Anschluss 16 des Paares 14 angeschlossen, um hier mit der Minusendstufe des Paares 14 verbunden zu sein. An den Anschlüssen 11, 15 und 16 sind jeweils den Plus- bzw. den Minus-Endstufentransistoren zugeordnete Diagnoseblöcke zugeordnet.

Die Basis oder das Gate der Transistoren 8 und 9 und der hier verdeckten Transistoren der Paare 13 und 14 wird von einem Prozessor angesteuert, um diese Transistoren entsprechend durchzuschalten. Die Transistoren 8 und 9 sowie die Verdeckten werden durchgeschaltet, um die Zündpillen 17 und 18 zu zünden, falls Rückhaltemittel ausgelöst werden sollen. Im Normalfall, also wenn die Zündpillen 17 und 18 nicht gezündet werden sollen, führen die Diagnosen 4 und 5 sowie die verdeckten Diagnosen der Paare 13 und 14 Diagnosemessungen der Zündpillen 17 und 18 durch. Dabei werden die Zündpillen 17 und 18 auf zu große bzw. zu kleine Widerstände vermessen. Die Widerstände werden über Spannungen vermessen, die auf Grund von Diagnoseströmen an den Zündpillen 17 und 18 abfallen. Überschreiten die Spannungen an den Zündpillen 17 und 18 vorgegebene Werte, dann liegt ein Fehlverhalten der Zündpillen 17 und 18 vor und die Funktionsweise der Zündpillen 17 und 18 ist gefährdet, und damit auch der Einsatz der Rückhaltemittel. Dies führt dann gegebenenfalls zu einer Warnung bzw. ein Abschalten der Rückhaltemittel.

Die Ansteuerungen 2 und 7 sind Treiberschaltungen, die von dem Prozessor im Auslösefall angesteuert werden. Die Ansteuerschaltungen 2 und 7 sind demnach mit dem Gate bzw. der Basis der Transistoren 8 und 9 verbunden.

## Patentansprüche

1. Vorrichtung zur Ansteuerung von Zündkreisen, wobei die Vorrichtung für jeden Zündkreis (17, 18) jeweils eine Plus- und Minus-Endstufe (1, 6, 8, 9) aufweist, wobei jeder Plusendstufe (1, 8) und jeder Minusendstufe (6, 9) jeweils eine Ansteuerung (2, 7) und eine Diagnose (4, 5) zugeordnet sind, **dadurch gekennzeichnet, dass** die Plus- und Minus-Endstufen (1, 6, 8, 9) auf einem einzigen Substrat in Paaren (12, 13, 14) hergestellt sind und dass für jeden Zündkreis (17, 18) eine Plus- und eine Minus-Endstufe aus unterschiedlichen Paaren (12, bis 14) vorgesehen sind.

2. Vorrichtung nach Anspruch 1, **dadurch gekennzeichnet, dass** die Plus- und Minus-Endstufe (1, 6, 8, 9) des gleichen Paares (12 bis 14) jeweils mit der gleichen Energieversorgung verbunden sind.

## Claims

1. Apparatus for actuating firing circuits, the apparatus in each case having a positive and negative output stage (1, 6, 8, 9) for each firing circuit (17, 18), each positive output stage (1, 8) and each negative output stage (6, 9) having an associated actuating means (2, 7) and an associated diagnosis means (4, 5) in each case, **characterized in that** the positive and negative output stages (1, 6, 8, 9) are produced in pairs (12, 13, 14) on a single substrate, and **in that** a positive and a negative output stage from different pairs (12 to 14) are provided for each firing circuit (17, 18).

2. Apparatus according to Claim 1, **characterized in that** the positive and negative output stages (1, 6, 8, 9) of the same pair (12 to 14) are connected to the same power supply in each case.

## Revendications

1. Dispositif pour amorcer des circuits d'allumage, avec pour chaque circuit d'allumage (17, 18) chaque fois un étage final Plus et Moins (1, 6, 8, 9), avec un système d'amorçage (2, 7) et un système de diagnostic (4, 5) associés respectivement à chaque étage final Plus (1, 8) et à chaque étage final Moins (6, 9),
**caractérisé en ce que**
les étages finaux Plus et Moins (1, 6, 8, 9) sont réalisés par paires (12, 13, 14) sur un seul substrat avec pour chaque circuit d'allumage (17, 18) un étage final Plus et un étage final Moins de paires différentes (12 à 14).

2. Dispositif selon la revendication 1,
**caractérisé en ce que**
l'étage final Plus et l'étage final Moins (1, 6, 8, 9) de la même paire (12 à 14) sont chaque fois raccordés à la même alimentation en énergie.
